# EUROPEAN PATENT APPLICATION

(11) **EP 4 645 540 A1**
(43) Date of publication of application: **05.11.2025**
(21) Application number: 24886136.1
(22) Date of filing: 24.10.2024
(51) Int. Cl.: H01M 50/167, H01M 50/188, H01M 50/107, H01M 10/04, B21D 51/26, H01M 50/213

(54) **CYLINDRICAL BATTERY WITH ENHANCED SEALING**

(30) Priority: 01.11.2023 KR 20230148880; 01.07.2024 KR 20240086236
(71) Applicant: LG Energy Solution, Ltd., Seoul 07335 (KR)
(72) Inventor: KIM, Dae Cheon, Daejeon 34122 (KR); KIM, Eung Seo, Daejeon 34122 (KR); PARK, Dae Hyun, Daejeon 34122 (KR); KIM, Jong Seong, Daejeon 34122 (KR)
(74) Representative: Goddar, Heinz J.
(86) International application number: PCT/KR2024/016288
(87) International publication number: WO 2025/095461

(57) **Abstract**

Disclosed are a cylindrical battery including a cylindrical can configured to receive an electrode assembly, a cap assembly mounted to an opening of the cylindrical can, and a gasket interposed between the cylindrical can and the cap assembly, wherein the cylindrical can is provided at an upper part thereof with a crimped portion wrapping around an outer periphery of the gasket, the crimped portion is provided at an end thereof with a bent portion further bent into the gasket, and the length of the bent portion is less than 0.175 mm, a method for sealing the cylindrical battery, and a crimping apparatus of the cylindrical battery. In sealing by the crimped portion of the cylindrical battery, the problem of sealing degradation caused by primary crimping that applies primary pressure and secondary crimping that applies secondary pressure is solved, and sealing of the cylindrical battery is further enhanced by secondary sealing.

## Description

### [Technical Field]

The present invention relates to a cylindrical battery with enhanced sealing. More particularly, the present invention relates to a cylindrical battery with enhanced sealing of a crimped portion, a method for sealing the cylindrical battery, and a crimping apparatus of the cylindrical battery.

### [Background Art]

Depending on the shape of a battery case, lithium secondary batteries are classified into a cylindrical battery having an electrode assembly mounted in a cylindrical metal can, a prismatic battery having an electrode assembly mounted in a prismatic metal can, and a pouch-shaped battery having an electrode assembly mounted in a pouch case made of an aluminum laminate sheet. The cylindrical battery has the advantage of relatively large capacity and structural stability.

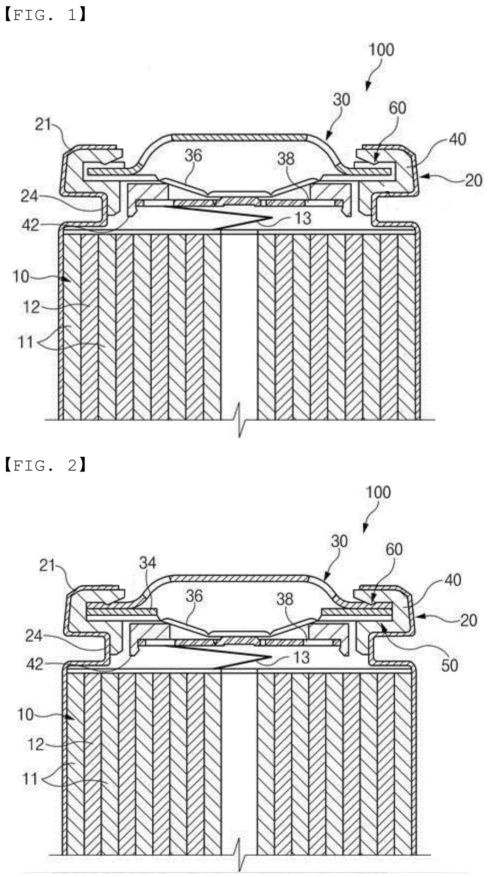

FIGs. 1 and 2 are sectional views showing two examples of a cylindrical battery. In FIGs. 1 and 2, the cylindrical battery includes an electrode assembly including a positive electrode, a negative electrode, and a separator. The cylindrical battery includes a cylindrical can including an upper end opening, a cap assembly coupled to the cylindrical can by a crimped portion formed at an outer circumferential surface of an upper part of the cylindrical can, the crimped portion being formed as a result of a part of the upper end opening being bent inward, and a gasket interposed between the cylindrical can and the cap assembly.

The crimped portion is formed at an upper end of the cylindrical can to allow the cap assembly to be mounted on an open end of the cylindrical can. More specifically, the crimped portion is formed by beading the upper end of the cylindrical can to form a recess inward, mounting the gasket to the open end, sequentially inserting a top cap, a PTC element, and an outer circumferential surface of a safety vent, and inwardly bending the upper end of the cylindrical can. As a result, the crimped portion is formed to enclose the gasket located on an inner surface of the crimped portion, and the cap assembly is mounted by performing crimping and pressing.

The crimped portion has a structure in which an end of the crimped portion is bent inwardly such that the cap assembly can be reliably mounted to the open upper end of the cylindrical can in the state in which the gasket is interposed therebetween. A sidewall of the crimped portion is vertically formed, in the same manner as a side surface of the battery.

The material of the cylindrical can is not particularly limited, and the cylindrical can may be made of any one of stainless steel, steel, aluminum, or an equivalent thereto. Because the cylindrical can must be conductive, a metal component is used, and the metal component may be susceptible to corrosion due to contact with moisture from the outside.

Referring to FIG. 1, the cylindrical battery 100 includes a cylindrical can 20 in which an electrode assembly 10 is received together with an electrolyte, a cap assembly 30 hermetically coupled to an open end of the cylindrical can 20, and a gasket 40 interposed between the cylindrical can 20 and the cap assembly 30.

The cap assembly 30 may include a top cap configured to seal the open end of the cylindrical can 20 and a safety vent 36 having one surface in contact with a side surface, an upper surface, and a lower surface of the top cap and the other surface bent and disposed in contact with an inner surface of the gasket 40, the safety vent being electrically connected to the electrode assembly 10.

The battery including the cap assembly 30 may provide instantaneously high output and may be stable against external physical impact, such as vibration or drop, when used as a power source for a power tool such as an electric drill.

In the cap assembly 30 in which the safety vent 36 is bent to wrap around the top cap, the contact surface between the safety vent 36 and the top cap may form one or more connections, the connections being formed by welding or the like. As used in the present invention, the term "welding" is intended to include not only welding in the literal sense of the term, such as laser welding, ultrasonic welding, and resistance welding, but also fastening methods such as soldering. Welding may be performed during the assembly of the cap assembly 30, or may be performed in the state in which the cap assembly 30 is mounted to the cylindrical can 20.

The safety vent 36 serves to cut off current or exhaust gas in the event of an increase in pressure in the battery, and is preferably made of metal. The thickness of the safety vent 36 may vary depending on the material and structure, and is not particularly limited as long as the safety vent is capable of rupturing to discharge gas in the event of a predetermined high pressure in the battery, and may be, for example, 0.2 to 0.6 mm.

The thickness of the top cap in contact with the safety vent 36 is not particularly limited as long as the top cap is capable of protecting various components of the cap assembly 30 from externally applied pressure, and may be, for example, 0.3 to 0.5 mm. If the thickness of the top cap is too small, mechanical rigidity is insufficient, which is undesirable. If the thickness of the top cap is too large, on the other hand, the size and weight increase, whereby the capacity of the battery may decrease compared to batteries with the same specifications, which is also undesirable.

Preferably, the gasket 40 has an overall cylindrical shape with open ends, wherein one end of the gasket facing the inner surface of the cylindrical can 20 is bent at a right angle toward the center so as to rest on the open end of the cylindrical can 20, i.e., the crimped portion. The other end of the gasket 40 is initially straight and faces in an axial direction of the cylindrical gasket 40, and is bent at a right angle toward the center during the pressing of the cylindrical can 20 such that an inner circumferential surface and an outer circumferential surface of the gasket are folded in tight contact with the top cap of the cap assembly 30 and the inner surface of the cylindrical can 20, respectively.

The gasket 40 is made of an electrically insulating resilient polymer resin, which is desirably electrically insulating, impact resistant, resilient, and durable. In general, the gasket must have insulation, excellent chemical resistance to an electrolyte to prevent leakage to the electrolyte, and heat resistant because the gasket must remain airtight under the harsh conditions of high temperature and high humidity in the battery. The gasket is generally made of polypropylene; however, the present invention is not limited thereto. In addition, the gasket 40 may include a vaporizable rust inhibitor.

The electrode assembly 10 preferably has a structure in which two electrode plates 11 having different polarities and having a roll-shaped wide plate shape and a separator 12 interposed between the electrode plates 11 in order to insulate the electrode plates from each other or disposed on the left side or the right side of one of the electrode plates 11 are wound in the form of a so-called "jelly roll". Of course, the electrode assembly may be configured in a form in which a positive electrode plate and a negative electrode plate having a predetermined standard are stacked in the state in which a separator is interposed therebetween.

Each of the two electrode plates 11 has a structure in which an active material slurry is applied to a current collector in the form of a metal foil or metal mesh including aluminum or copper. The slurry is typically formed by stirring a granular active material, an auxiliary conductor, a binder, and a plasticizer in the presence of a solvent. The solvent is removed in a subsequent process. Uncoated portions where no slurry is applied may be present on a start part and an end part of the current collector in a direction in which each of the electrode plates 11 is wound. A pair of leads corresponding to each electrode plate 11 is attached to the uncoated portions. A first lead 13, which is attached to an upper end of the electrode assembly 10, is electrically connected to the cap assembly 30, and a second lead (not shown), which is attached to a lower end of the electrode assembly 10, is connected to the bottom of the cylindrical can 20. Of course, both the first lead 13 and the second lead may be withdrawn in a direction toward the cap assembly 30. Preferably, the electrode assembly 10 is disposed on a first insulating plate (not shown) installed on the bottom of the cylindrical can 20, and a second insulating plate (not shown) is disposed on the upper end of the electrode assembly 10. The first insulating plate insulates the electrode assembly 10 and the bottom of the cylindrical can 20 from each other, and the second insulating plate insulates the electrode assembly 10 and the cap assembly 30 from each other.

The cylindrical can 20 is made of a lightweight conductive metal material, such as aluminum or an aluminum alloy, and has a cylindrical structure with an open top and a closed bottom opposite the open top. The electrode assembly 10 and an electrolyte (not shown) are received in an inner space of the cylindrical can 20. The electrolyte is configured to move the lithium ions produced by the electrochemical reaction between the electrode plates 11 during charging and discharging of the secondary battery 100. The electrolyte may be a non-aqueous organic electrolyte, which is a mixture of lithium salts and a high purity organic solvent, or a polymer using a polymer electrolyte, but the type of electrolyte is not limited in the present invention.

Meanwhile, a center pin (not shown) configured to prevent unwinding of the electrode assembly 10 wound in the form of a jelly roll and to serve as a passage for the movement of gas in the secondary battery 100 may be inserted into the center of the cylindrical can 20. The upper part of the cylindrical can 20, i.e., the upper end of the electrode assembly 10, is provided with a beading portion 24 bent by pressing from the outside to the inside to prevent the movement of the electrode assembly 10 in upward and downward directions.

The cap assembly 30, which is assembled to the opening of the cylindrical can 20 in a hermetically sealed state with a gasket 40, includes a top cap and a safety vent 36. The top cap has an electrode terminal (not shown) formed for electrical connection with the outside. The safety vent 36 is bent so as to wrap around an outer circumferential surface of the top cap.

The cylindrical battery 100 may further include a current interrupt device welded to a lower end of the safety vent 36, a lower part of the current interrupt device being connected to the electrode assembly 10. Specifically, the safety vent 36 may be convex at the center thereof, which is welded to the current interrupt device (CID) 38, wherein the current interrupt device 38 may be deformable together with the safety vent 36 by internal pressure of the secondary battery 100, and may be divided into a CID gasket and a CID filter.

The cylindrical battery 100 may further include an auxiliary gasket. The auxiliary gasket 42 is a gasket for the current interrupt device 38 and is configured to wrap around an outer circumferential surface of the current interrupt device 38. In particular, the auxiliary gasket 42 is in contact with an upper part and a side part of the outer circumferential surface of the current interrupt device 38, and supports the upper part and the side part of the current interrupt device 38. The auxiliary gasket 42 serves to electrically isolate the current interrupt device 38 and the safety vent 36 from each other, except the part where the protruding portion of the safety vent 36 and the current interrupt device 38 are in contact.

A positive electrode lead welded to a positive electrode foil of the jelly-roll type electrode assembly 10 is electrically connected to the cap assembly 30 and is connected to a protruding terminal on an upper end of the top cap, and a negative electrode lead welded to a negative electrode foil is welded to the closed end of the cylindrical can 20 such that the cylindrical can 20 constitutes a negative electrode terminal. The material of the cylindrical can 20 is not particularly limited and may be any one of stainless steel, steel, aluminum, and an equivalent thereto. In the state in which the electrode assembly 10 is received in the cylindrical can 20, an electrolyte is injected into the cylindrical can, and the assembly of the secondary battery is completed by mounting the cap assembly 30 to the open end of the cylindrical can 20 to seal the cylindrical can.

The secondary battery may be a lithium (ion) secondary battery having high energy density, high discharge voltage, and high output stability. The lithium secondary battery includes a positive electrode, a negative electrode, a separator 12, and a lithium salt-containing non-aqueous electrolyte. The positive electrode is manufactured, for example, by applying a mixture of a positive electrode active material, a conductive agent, and a binder to a positive electrode current collector and drying the same, and a filler may be further added as needed. The negative electrode is manufactured by applying a negative electrode active material to a negative electrode current collector and drying the same, and the above components may be further included as needed. The separator 12 is interposed between the negative electrode and the positive electrode, and an insulative thin film having high ionic permeability and mechanical strength is used. The lithium salt-containing non-aqueous electrolyte is composed of a non-aqueous electrolyte and a lithium salt, and a liquid non-aqueous electrolyte, a solid electrolyte, or an inorganic solid electrolyte is used as the non-aqueous electrolyte. Here, the current collector, the electrode active material, the conductive agent, the binder, the filler, the separator 12, the electrolyte, and the lithium salt are widely known in the art, and detailed descriptions thereof will be omitted.

FIG. 2 is a sectional view showing another example of the conventional cylindrical battery. Among the reference numerals described in FIG. 2, components identical to the reference numerals described with reference to FIG. 1 are identical members having the same functions. Referring to FIG. 2, the cap assembly 30 may include a top cap disposed to seal the open end of the cylindrical can 20 in contact with the protrusion of the gasket 40, a positive temperature coefficient (PTC) element 34 disposed in contact with the top cap, and a safety vent 36 having one surface disposed in contact with the PTC element 34 and the other surface disposed in contact with the gasket 40. The gasket 40 may be the same as the gasket used in FIG. 1.

The PTC element 34 serves to block the current by significantly increasing the resistance of the battery when the temperature in the battery increases, and the thickness of the PTC element 34 may also vary depending on the material and structure, and may be, for example, 0.2 mm to 0.4 mm. If the thickness of the PTC element 34 is greater than 0.4 mm, the internal resistance increases and may increase the size of the battery, which may decrease the capacity of the battery relative to the same size. If the thickness of the PTC element 34 is less than 0.2 mm, on the other hand, it is difficult to achieve a desired current blocking effect at high temperatures and the PTC element 34 may be destroyed even by weak external impact. Therefore, the thickness of the PTC element 34 may be appropriately determined within the above thickness range by considering these points in combination.

The thickness of the top cap in contact with the PTC element 34 is not particularly limited as long as the thickness is within a range that can protect various components of the cap assembly 30 from externally applied pressure, and may be, for example, 0.3 to 0.5 mm. If the thickness of the top cap is too small, mechanical rigidity is insufficient, which is undesirable. If the thickness of the top cap is too large, on the other hand, the size and weight increase, whereby the capacity of the battery may decrease compared to batteries with the same specifications, which is also undesirable.

The secondary battery including the cap assembly 30 including the top cap, the PTC element 34, and the safety vent may be used as a power source for mobile phones, laptop computers, and the like that require a reliable, constant output.

The present invention relates to a cylindrical battery with enhanced sealing, and more particularly to a cylindrical battery with enhanced sealing of a crimped portion, and, hereinafter, components related to sealing of the crimped portion, i.e., the crimped portion, a beading portion, a gasket, a cylindrical can, and a cap assembly will be schematically shown and described.

The cylindrical battery has a structure in which an open end is formed and sealing is achieved by a crimped portion formed at the open end. The cylindrical battery is sealed by mechanical pressing, and in sealing by mechanical pressing, when a small gap between two interfaces occurs, the gap may act as a leakage path. As a result, the cylindrical battery has the disadvantage of lower sealing characteristics than a pouch-shaped battery. When the cylindrical battery is used as a power source for electric vehicles, hybrid vehicles, and the like, the sealing characteristics of the battery are very important due to the long lifespan required and high density of battery cells.

Much research has been conducted to seal can-shaped batteries including the cylindrical battery.

Patent Document 1 describes a configuration in which an O-shaped positive electrode ring is inserted into a space formed between a gasket and a sealing can to fill the space, and Patent Document 2 describes a configuration in which a sealing membrane is used to improve airtightness of an inner space between a gasket and a can. Patent Document 3 describes a configuration that spaces between a gasket and a can and between the can and a positive electrode plate are filled with a sealing agent and a binding agent to improve the sealing performance and to form electrical insulation.

The positive electrode ring and the sealing membrane of Patent Documents 1 and 2 only serve to seal the space between the gasket and the sealing can, and basic features of the washer, such as electrical insulation and corrosion prevention, are not specified, whereby the positive electrode ring does not seem to be used as the washer. The sealing agent and the binding agent of Patent Document 3 are not components but materials that fill the spaces between the gasket and the can and between the can and the positive electrode plate, and even if the sealing agent and the binding agent have the function of insulation and sealing, it would not be possible to correspond the sealing agent and the binding agent to a washer. In addition, the configuration of injecting the sealing agent and the binding agent of Patent Document 3 is merely for sealing and insulation, and it is difficult to regard the same as a washer between the gasket and the can to fill the fine gaps in the inner space through absorption of an electrolyte.

In Patent Document 4, an upper end of a crimped portion of a cylindrical can is successively bent twice under a predetermined condition to inhibit opening of a sealed portion when external physical impact, such as vibration or drop, is applied or when the internal pressure increases, thereby preventing leakage of an electrolyte and minimizing deformation such as wrinkles formed in the can when bending with a small radius of curvature.

Patent Document 5 relates to a cylindrical battery including a primary crimping die configured to apply primary pressure so that an end of a top opening forms a slope inclined toward the central axis of a metal can in a vertical section and a secondary crimping die configured to apply secondary pressure to the end of the top opening where the slope is formed so as to form a flat section parallel to a lower surface of the metal can on a crimped portion, wherein a flat portion corresponding to the flat section is formed on the lower surface of the second crimping die facing the end of the top opening so as to form a flat section on the crimped portion.

Patent Document 4 is intended to enhance sealing, but does not recognize that bending of the crimped portion may cause an unusual phenomenon. Patent Document 5 is simply intended to form the flat section at the crimped portion to facilitate welding, but does not provide a solution to enhance sealing.

In particular, the inventor of the present invention has observed an unusual phenomenon in which sealing (pressing force) decreases if secondary or more additional crimping is performed in addition to primary crimping, but the prior documents neither recognize this nor provide a solution thereto.

With respect to the above configuration, it was observed from the simulation results that the pressing force of the crimped portion changes to +, 0, or - depending on the bending length or the bending angle. Although it is generally recognized that the pressing force increases when a bent portion is provided, the simulation results show a negative effect that the crimping force decreases over a certain length, which is not easily anticipated by those skilled in the art.
Japanese Patent Application Publication No. 2016-213126 ("Patent Document 1")
Japanese Patent Application Publication No. 2004-079355 ("Patent Document 2")
Japanese Registered Patent Publication No. 5238153 ("Patent Document 3")
Korean Patent Application Publication No. 2008-0053538 ("Patent Document 4")
Korean Patent Application Publication No. 2018-0072990 ("Patent Document 5")

### [Disclosure]

### [Technical Problem]

The present invention has been made in view of the above problems, and it is an object of the present invention to provide a cylindrical battery with enhanced sealing of a crimped portion configured such that, in sealing by the crimped portion of the cylindrical battery, the problem of sealing degradation caused by primary crimping that applies primary pressure and secondary crimping that applies secondary pressure is solved, and a method of enhancing sealing of the crimped portion seal of the cylindrical battery.

Here, the secondary crimping refers to additional crimping that is performed after the primary crimping. More specifically, the secondary crimping refers to a process of crimping the last bent portion of the crimped portion.

### [Technical Solution]

In order to accomplish the above object, the present invention provides a cylindrical battery including a cylindrical can configured to receive an electrode assembly, a cap assembly mounted to an opening of the cylindrical can, and a gasket interposed between the cylindrical can and the cap assembly, wherein

the cylindrical can is provided at an upper part thereof with a crimped portion wrapping around an outer periphery of the gasket, the crimped portion is provided at an end thereof with a bent portion further bent into the gasket, and the length of the bent portion is less than 0.175 mm. The length of the bent portion corresponds to less than 31.8% of the thickness of the gasket.

The length of the bent portion may be 0.15 mm or less. The length of the bent portion corresponds to 27.2% or less of the thickness of the gasket.

The bending angle of the bent portion may range from 15 degrees downward from a horizontal to 90 degrees downward from the horizontal, which is a right angle to the horizontal.

The gasket may include polybutylene terephthalate (PBT) .

The crimped portion may include a horizontal part positioned at the uppermost end of the cylindrical battery, the horizontal part defining a horizontal plane, and the bent portion may be positioned at an end of the horizontal part.

The length of the horizontal part may be 0.9 mm or more.

The thickness of the cylindrical can may be 0.3 mm or more.

In addition, the present invention provides a method for sealing a cylindrical battery including a cylindrical can configured to receive an electrode assembly, a cap assembly mounted to an opening of the cylindrical can, and a gasket interposed between the cylindrical can and the cap assembly, the method including:
bending an upper part of the cylindrical can to form a crimped portion wrapping around an outer periphery of the gasket and further bending an end of the crimped portion into the gasket to form a bent portion, wherein the length of the bent portion is less than 0.175 mm. The length of the bent portion corresponds to less than 31.8% of the thickness of the gasket.

In addition, the length of the bent portion may be 0.15 mm or less. The length of the bent portion corresponds to 27.2% or less of the thickness of the gasket.

The bending angle of the bent portion may range from 15 degrees downward from a horizontal to 90 degrees downward from the horizontal, which is a right angle to the horizontal.

The gasket may include polybutylene terephthalate (PBT) .

The crimped portion may include a horizontal part positioned at the uppermost end of the cylindrical battery, the horizontal part defining a horizontal plane, and the bent portion may be positioned at an end of the horizontal part.

The length of the horizontal part may be 0.9 mm or more.

The thickness of the cylindrical can may be 0.3 mm or more.

In addition, the present invention provides a battery pack including the cylindrical battery.

In addition, the present invention provides a crimping apparatus of a cylindrical battery for crimping an upper part of a cylindrical can of the cylindrical battery to form a crimped portion configured to wrap around an outer periphery of a gasket, the crimping apparatus including three jaws configured to fix a cylindrical side surface of the cylindrical can, at least one crimping unit configured to stepwise crimp the cylindrical battery, and a final crimping unit configured to finally crimp the cylindrical battery, wherein the length of a bent portion obtained as a result of the final crimping unit further bending an end of the crimped portion into the gasket is less than 0.175 mm. The length of the bent portion corresponds to less than 31.8% of the thickness of the gasket.

The length of the bent portion may be 0.15 mm or less. The length of the bent portion corresponds to 27.2% or less of the thickness of the gasket.

The bending angle of the bent portion may range from 15 degrees downward from a horizontal to 90 degrees downward from the horizontal, which is a right angle to the horizontal.

The crimped portion may include a horizontal part positioned at the uppermost end of the cylindrical battery, the horizontal part defining a horizontal plane, and the bent portion may be positioned at an end of the horizontal part.

The length of the horizontal part may be 0.9 mm or more.

The thickness of the cylindrical can may be 0.3 mm or more.

The present invention may provide any possible combinations of the above solving means.

### [Advantageous Effects]

As is apparent from the above description, the present invention provides a cylindrical battery including a cylindrical can configured to receive an electrode assembly, a cap assembly mounted to an opening of the cylindrical can, and a gasket interposed between the cylindrical can and the cap assembly, wherein the cylindrical can is provided at an upper part thereof with a crimped portion configured to wrap around an outer periphery of the gasket, the crimped portion is provided at an end thereof with a bent portion further bent into the gasket, and the length of the bent portion is less than 0.175 mm.

In addition, the present invention provides a method for sealing a cylindrical battery including a cylindrical can configured to receive an electrode assembly, a cap assembly mounted to an opening of the cylindrical can, and a gasket interposed between the cylindrical can and the cap assembly, the method including bending an upper part of the cylindrical can to form a crimped portion configured to wrap around an outer periphery of the gasket and further bending an end of the crimped portion into the gasket to form a bent portion, wherein the length of the bent portion is less than 0.175 mm.

In addition, the present invention provides a crimping apparatus of a cylindrical battery for crimping an upper part of a cylindrical can of the cylindrical battery to form a crimped portion configured to wrap around an outer periphery of a gasket, the crimping apparatus including three jaws configured to fix a cylindrical side surface of the cylindrical can, at least one crimping unit configured to stepwise crimp the cylindrical battery, and a final crimping unit configured to finally crimp the cylindrical battery, wherein the length of a bent portion obtained as a result of the final crimping unit further bending an end of the crimped portion into the gasket is less than 0.175 mm.

Consequently, it is possible to solve the problem of sealing degradation caused by primary crimping that applies primary pressure and secondary crimping that applies secondary pressure in sealing by the crimped portion of the cylindrical battery. The cylindrical battery according to the present invention is characterized in that sealing is further enhanced by secondary sealing.

### [Description of Drawings]

FIG. 1 is a sectional view showing an example of a cylindrical battery.
FIG. 2 is a sectional view showing another example of the cylindrical battery.
FIG. 3 is a schematic view of a crimped portion according to the present invention.
FIG. 4 shows an example of a calculation method simulated according to the present invention.
FIG. 5 shows another example of the calculation method simulated according to the present invention.
FIG. 6 shows the results of simulation according to the present invention.
FIG. 7 is an exploded perspective view of a crimping apparatus according to the present invention.
FIG. 8 is a sectional view of the crimping apparatus according to the present invention.
FIG. 9 is a partial enlarged view of a final crimping unit according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

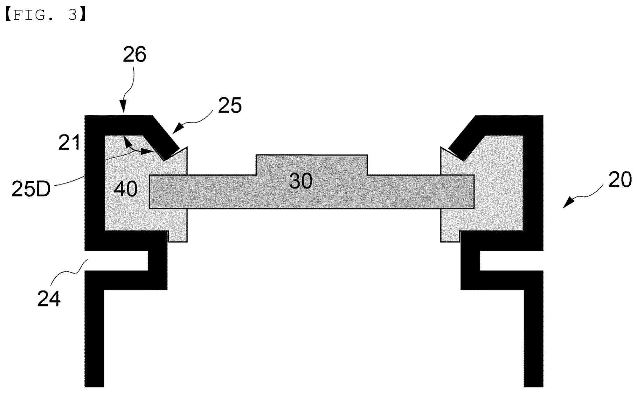

FIG. 3 is a schematic view of a crimped portion according to the present invention. FIG. 3 is a simplified schematic view of the crimped portion for simulation. A cylindrical battery is provided with a beading portion 24, a gasket 40 is primarily sealed by a crimped portion 21, and a cap assembly 30 is also sealed by the gasket 40. The crimped portion 21 includes a horizontal part 26 provided at the uppermost end thereof, the horizontal part 26 forming a horizontal plane, and a bent portion 25 is provided at the end of the horizontal part 26. The length of the bent portion 25 and the angle 25D at which the bent portion 25 is bent are variables used in the simulation.

Table 1 shows a simulation set in an embodiment according to the present invention.

**[Table 1]**

| Case | Length of bent portion (mm) | Bending angle of bent portion (Degree) |
|---|---|---|
| Default | - | - |
| 1 | 0.1 | 15 |
| 2 | | 30 |
| 3 | | 45 |
| 4 | | 60 |
| 5 | | 75 |
| 6 | | 80 |
| 7 | | 90 |
| 8 | 0.15 | 15 |
| 9 | | 30 |
| 10 | | 45 |
| 11 | | 60 |
| 12 | | 75 |
| 13 | | 80 |
| 14 | | 90 |
| 15 | 0.175 | 15 |
| 16 | | 30 |
| 17 | | 45 |
| 18 | | 60 |
| 19 | | 75 |
| 20 | | 80 |
| 21 | | 90 |
| 22 | 0.2 | 15 |
| 23 | | 30 |
| 24 | | 45 |
| 25 | | 60 |
| 26 | | 75 |
| 27 | | 80 |
| 28 | | 90 |
| 29 | 0.3 | 15 |
| 30 | | 30 |
| 31 | | 45 |
| 32 | | 60 |
| 33 | | 75 |
| 34 | | 80 |
| 35 | | 90 |

The simulation was performed using the following analysis method.

Secondary crimping was simulated through Interference Fit Analysis. Tertiary crimping was simulated by applying hinge (edge) and boundary conditions to the bent portion of the cylindrical can. The contact pressure of the gasket (PBT) was calculated based on the angle of the bent portion. The thickness of the gasket used in the simulation was 0.55 mm, and the material of the gasket was PBT. The physical properties of PBT were calculated for each of elastic and plastic regions thereof. If plastic stress is 42 MPa or less, the region was considered as the elastic region, and the stress was calculated by multiplying elastic modulus 1567 by elongation. For the plastic region, a plastic stress-plastic strain curve was used.

The length of the horizontal part was calculated based on a minimum of 0.9 mm. The material of the cylindrical can was nickel-plated steel, and the thickness of the crimped region was considered to be 0.3 mm.

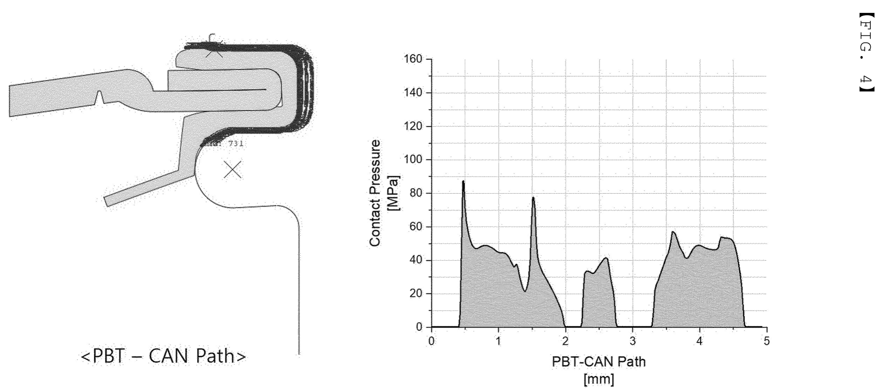

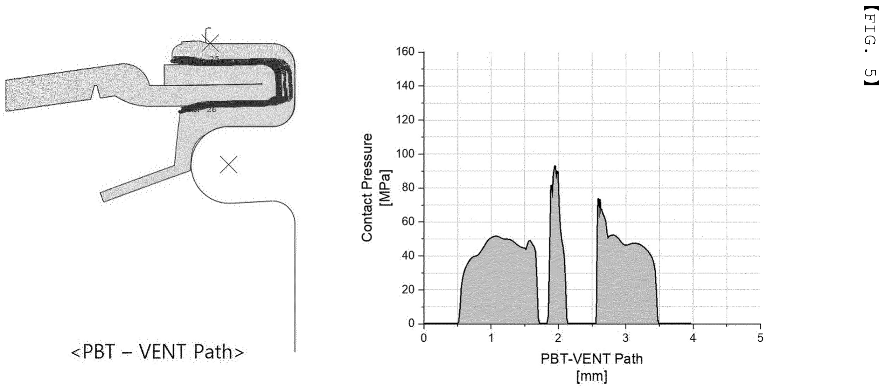

FIG. 4 shows an example of a calculation method simulated according to the present invention, and FIG. 5 shows another example of the calculation method simulated according to the present invention.

Referring to FIGs. 4 and 5, the part colored in red on the left side of each of FIGs. 4 and 5 is the part where the contact pressure was calculated. FIGs. 4 and 5 show the pressure on the inside and outside of the gasket for one case. The upper left side of the red-colored part, i.e., the beginning of the U-shape, was designated as zero, and the contact pressure corresponding to each part was calculated while moving therealong. The results of calculation according to an example are shown on the right side of each of FIGs. 4 and 5. The contact pressure in the graph on the right side was integrated over length to calculate each contact pressure, and all cases in FIGs. 4 and 5 were summed to derive the overall contact pressure for one case. The part colored in red in each of FIGs. 4 and 5 is the region where sealing is actually achieved by the gasket, and the contact pressure was calculated in all of these parts to determine the pressure generated by the overall sealing.

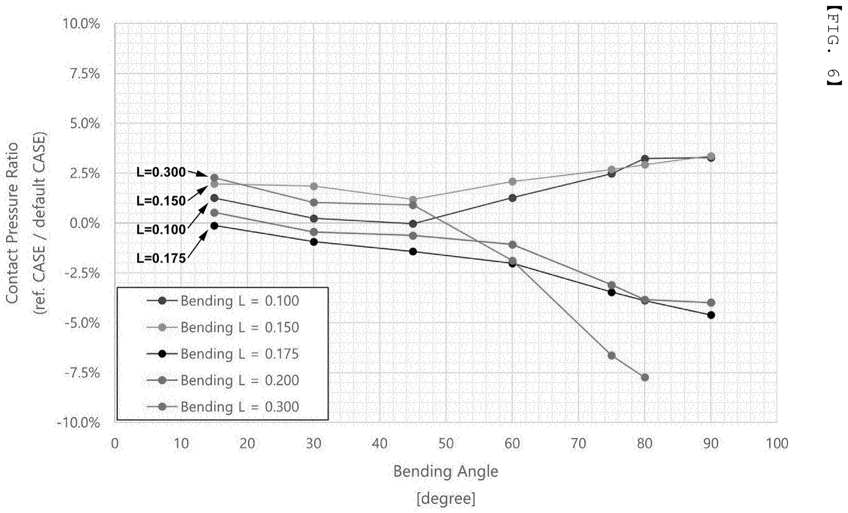

FIG. 6 shows the results of simulation according to the present invention.

Referring to FIG. 6, when the length (bending length) of the bent portion is 0.15 mm or less, the contact pressure increases as the bending angle of the bent portion increases. That is, it was found that sealing by an additional bent portion is effective only when the length of the bent portion is 0.15 mm or less, and when the length of the bent portion exceeds 0.15 mm, sealing is adversely effective. Comparing this to a gasket thickness of 0.55 mm, this corresponds to 27.3% or less of the gasket thickness.

When the length (bending length) of the bent portion is 0.175 mm or more, the contact pressure actually decreases as the bending angle of the bent portion increases. Compared to a gasket thickness of 0.55 mm, this corresponds to 31.8% or more of the gasket thickness. That is, sealing by an additional bent portion was found to be adversely effective. This is because the bend portion forms a dead space between the gasket and the cylindrical can, which reduces the contact pressure. In addition, the bent portion causes significant plastic deformation of the gasket, which reduces the contact pressure.

As such, it can be seen that the contact pressure (degree of sealing) decreases when secondary sealing is performed by the bent portion, contrary to the usual prediction. In order to enhance the sealing by the bent portion, it is necessary to ensure that the bent portion does not form a dead space between the gasket and the cylindrical can and to limit the size and bending angle of the bent portion to a range where the bent portion does not cause significant plastic deformation of the gasket.

A crimping unit is usually constituted in two or more stages, and an upper part of the cylindrical can is crimped by bending the upper part of the cylindrical can in stages. Three jaws clamp the cylindrical can based on the beading portion of the cylindrical can, and the end of the cylindrical can is bent and deformed by the crimping unit moving downward from above.

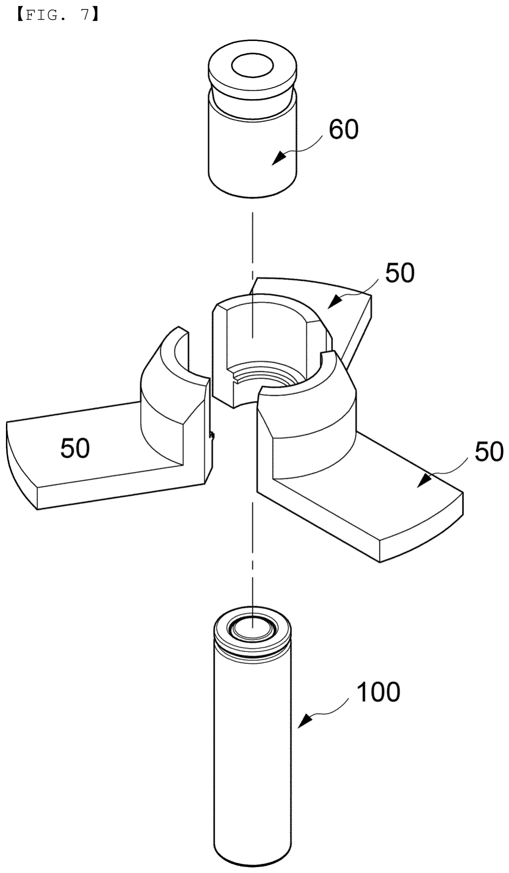

In the crimping apparatus according to the present invention, crimping which normally proceeds is the same as in a conventional crimping apparatus. Stepwise crimping is carried out sequentially along a circular orbit by a cam-type apparatus. However, the crimping apparatus according to the present invention is characterized by a final crimping unit, which is shown in FIGs. 7 to 9.

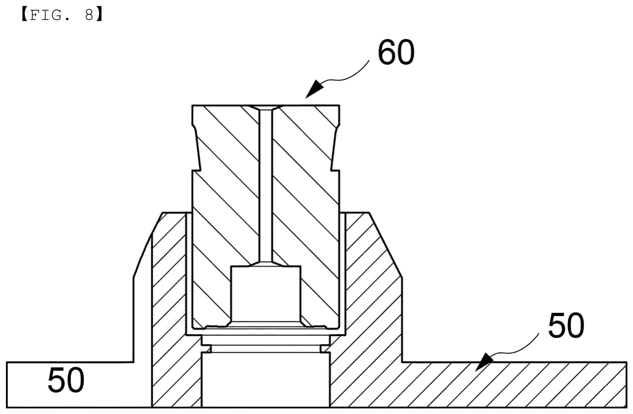

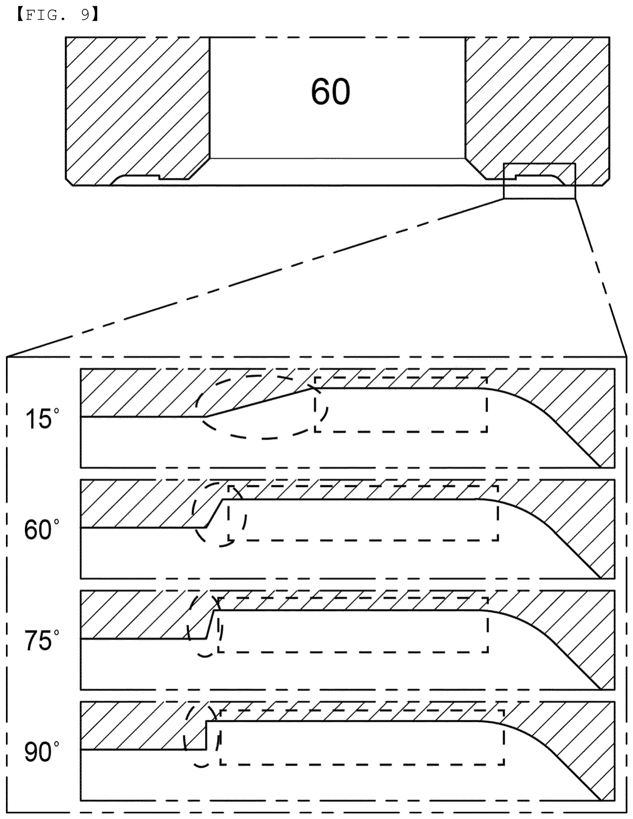

FIG. 7 is an exploded perspective view of a crimping apparatus according to the present invention, FIG. 8 is a sectional view of the crimping apparatus according to the present invention, and FIG. 9 is a partial enlarged view of a final crimping unit according to the present invention.

Referring to FIGs. 7 to 9, a crimping apparatus of a cylindrical battery 100 for crimping an upper part of a cylindrical can of the cylindrical battery to form a crimped portion configured to wrap around the outer periphery of a gasket includes three jaws 50 configured to fix a cylindrical side surface of the cylindrical can, at least one crimping unit configured to stepwise crimp the cylindrical battery, and a final crimping unit 60 configured to finally crimp the cylindrical battery, wherein the length of a bent portion obtained as a result of the final crimping unit 60 further bending an end of the crimped portion into the gasket is less than 0.175 mm. The length of the bent portion corresponds to less than 31.8% of the thickness of the gasket.

In FIG. 8, the cylindrical battery is omitted in order to show the state of coupling between the jaws and the final crimping unit 60. The bottom four figures of FIG. 9 are enlarged views showing the parts actually crimped by the final crimping unit 60. Referring to FIGs. 9 and 3, the part shown as a dotted square in the bottom four figures of FIG. 9 is the pact in contact with the horizontal part 26 of the crimped portion 21 of the cylindrical battery located at the uppermost end of the crimped portion while forming a horizontal plane. In actual crimping, the horizontal part 26 has already been bent by the crimping unit in the previous step, but contact is maintained in the final crimping.

In FIG. 9, the part indicated by a dotted circle is the part for crimping the bent portion 25 provided at the end of the horizontal part 26. The bent portion 25 has a length of 0.175 mm, which corresponds to less than 31.8% of the thickness of the gasket. Since the final crimping unit 60 according to FIG. 9 only bends the cylindrical can 20 without separate cutting, the length of an inclined surface of the part circled in FIG. 9 must not be excessively greater than the length of the bent portion 25, which is 0.175 mm. Since the bent portion 25 may contact the gasket 40 and may be inserted into the gasket 40, the length of the inclined surface of the part circled in FIG. 9 must be less than or similar to the length of the bent portion 25. This is because, if the length of the inclined surface of the final crimping unit 60 is excessively large, the gasket may be damaged.

Since the bending angle of the bent portion 25 is 15 degrees downward from the horizontal to 90 degrees, which is a right angle to the horizontal, the angle of the inclined surface in the part circled in FIG. 9 must also be 15 degrees downward from the horizontal to 90 degrees, which is a right angle to the horizontal. The lower end of FIG. 9 is a schematic view of this in each case.

That is, the final crimping unit according to the present invention includes a horizontal crimping portion in contact with the horizontal part 26 and a bending portion configured to crimp the bent portion 25, wherein the length of the bending portion is less than or similar to the length of the bent portion 25, preferably less than or equal to the length of the bent portion 25, and the angle formed by the horizontal crimping portion and the bending portion is 15 degrees to 90 degrees, which is a right angle.

Those skilled in the art to which the present invention pertains will appreciate that various applications and modifications are possible within the category of the present invention based on the above description.

### (Description of Reference Symbols)

10: Electrode assembly
11: Electrode plate
12: Separator
13: First lead
20: Cylindrical can
21: Crimped portion
24: Beading portion
25: Bent portion
25D: Bending angle of bent portion
26: Horizontal part
30: Cap assembly
34: PTC element
36: Safety vent
38: Current interrupt device
40: Gasket
42: Auxiliary gasket
50: Jaw
60: Final crimping unit
100: Cylindrical battery

## Claims

1. A cylindrical battery comprising:
a cylindrical can configured to receive an electrode assembly;
a cap assembly mounted to an opening of the cylindrical can; and
a gasket interposed between the cylindrical can and the cap assembly, wherein the cylindrical can is provided at an upper part thereof with a crimped portion wrapping around an outer periphery of the gasket,
wherein the crimped portion is provided at an end thereof with a bent portion further bent into the gasket, and
wherein a length of the bent portion is less than 0.175 mm.

2. The cylindrical battery according to claim 1, wherein the length of the bent portion is 0.15 mm or less.

3. The cylindrical battery according to claim 1, wherein a bending angle of the bent portion ranges from 15 degrees downward from a horizontal to 90 degrees downward from the horizontal, which is a right angle to the horizontal.

4. The cylindrical battery according to claim 1, wherein
the crimped portion comprises a horizontal part positioned at an uppermost end of the cylindrical battery, the horizontal part defining a horizontal plane, and
the bent portion is positioned at an end of the horizontal part.

5. The cylindrical battery according to claim 4, wherein a length of the horizontal part is 0.9 mm or more.

6. The cylindrical battery according to claim 1, wherein a thickness of the cylindrical can is 0.3 mm or more.

7. A method for sealing a cylindrical battery comprising:
a cylindrical can configured to receive an electrode assembly;
a cap assembly mounted to an opening of the cylindrical can; and
a gasket interposed between the cylindrical can and the cap assembly,
the method comprising:
bending an upper part of the cylindrical can to form a crimped portion wrapping around an outer periphery of the gasket; and
further bending an end of the crimped portion into the gasket to form a bent portion, wherein
a length of the bent portion is less than 0.175 mm.

8. The method according to claim 7, wherein the length of the bent portion is 0.15 mm or less.

9. The method according to claim 7, wherein a bending angle of the bent portion ranges from 15 degrees downward from a horizontal to 90 degrees downward from the horizontal, which is a right angle to the horizontal.

10. The method according to claim 7, wherein
the crimped portion comprises a horizontal part positioned at an uppermost end of the cylindrical battery, the horizontal part defining a horizontal plane, and
the bent portion is positioned at an end of the horizontal part.

11. The method according to claim 7, wherein a length of the horizontal part is 0.9 mm or more.

12. A crimping apparatus of a cylindrical battery for crimping an upper part of a cylindrical can of the cylindrical battery to form a crimped portion configured to wrap around an outer periphery of a gasket, the crimping apparatus comprising:
three jaws configured to fix a cylindrical side surface of the cylindrical can;
at least one crimping unit configured to stepwise crimp the cylindrical battery; and
a final crimping unit configured to finally crimp the cylindrical battery,
wherein a length of a bent portion obtained as a result of the final crimping unit further bending an end of the crimped portion into the gasket is less than 0.175 mm.

13. The crimping apparatus according to claim 12, wherein the length of the bent portion is 0.15 mm or less.

14. The crimping apparatus according to claim 12, wherein a bending angle of the bent portion ranges from 15 degrees downward from a horizontal to 90 degrees downward from the horizontal, which is a right angle to the horizontal.

15. The crimping apparatus according to claim 12, wherein
the crimped portion comprises a horizontal part positioned at an uppermost end of the cylindrical battery, the horizontal part defining a horizontal plane, and
the bent portion is positioned at an end of the horizontal part.

16. The crimping apparatus according to claim 12, wherein a length of the horizontal part is 0.9 mm or more.
